(19) Europäisches Patentamt
European Patent Office
Office européen des brevets

(11) Publication number: **0 197 680**
**A2**

(12) # EUROPEAN PATENT APPLICATION

(21) Application number: 86301956.8

(22) Date of filing: 18.03.86

(51) Int. Cl.[4]: H 01 M 4/38
H 01 M 10/34

(30) Priority: 01.04.85 US 718256

(43) Date of publication of application:
15.10.86 Bulletin 86/42

(84) Designated Contracting States:
BE DE FR GB IT NL SE

(71) Applicant: THE STANDARD OIL COMPANY
200 Public Square, 36-F-3454
Cleveland Ohio 44114-2375(US)

(72) Inventor: Harris, Jonathan H.
3705 Strandhill Rd
Shaker Hts Ohio 44122(US)

(72) Inventor: Tenhover, Michael A.
31700 Cheswick Place
Solon Ohio 44139(US)

(74) Representative: Smith, Sydney et al,
Elkington and Fife High Holborn House 52/54 High Holborn
London WC1V 6SH(GB)

(54) **Energy storage devices and amorphous metal alloy electrodes for use in acid environments.**

(57) An electrical storage device is described which utilizes an electrode for reversibly storing hydrogen in an acid environment, the electrode comprising an amorphous metal alloy of the formula:

$A_aM_bM'_c$

wherein A is at least one metal selected from a group consisting of Pd,

Ag, Au, Cu, Hg and Pt;

M is at least one metal selected from the group consisting of

Pb, Ru, Cr, Mo, Si, W, Ni, Al, Sn, Co, Fe, Zn, Cd, Ga and

M' is at least one metal selected from the group consisting of

Ca, Mg, Ti, Y, Zr, Hf, Nb, V, Ta and the rare earths; and wherein a ranges from about 0.005 to about 0.80;

b ranges from zero to about 0.70; and

c ranges from about 0.08 to about 0.95.

EP 0 197 680 A2

# ENERGY STORAGE DEVICES AND AMORPHOUS METAL ALLOY ELECTRODES FOR USE IN ACID ENVIRONMENTS

## Field of the Invention

The present invention relates to novel amorphous metal alloy electrodes and their use in energy storage devices. More specifically, the prevent invention relates to the use of amorphous metal alloy electrodes capable of reversibly storing hydrogen and their use in electrical energy storage devices that operate under acid conditions.

## Background of the Invention

Shortages of fossil fuel materials in the recent past has spurred much speculation regarding the feasibility of economies based on other energy sources. One such scenario is a hydrogen-fueled economy. Hydrogen has the highest energy density per unit weight of any chemical. Many projections have been made for an economy based on this element, but the technology is not yet in place to effect such a dramatic change in the world economy. Hydrogen is, however, a technically attractive source of fuel and energy storage. It is essentially non-polluting, the major by-product of combustion being $H_2O$, and can be made from readily available and abundant raw materials.

While it is well known that hydrogen can be stored as a compressed gas or cryogenically as a liquid, other less energy-intensive and more convenient means are required for widespread utilization of hydrogen as a source of stored energy.

It is known that some metals and metal alloys are capable of storing hydrogen reversibly within their lattice. This characteristic

may be exploited by exposing the metal or metal alloy to a large pressure of hydrogen, impregnating the metal or metal alloy with hydrogen and later recovering the stored hydrogen by subjecting the impregnated metal or alloy to a change in temperature or pressure. One example of a metal that is capable of reversible hydrogen storage is palladium which can absorb up to 0.6 hydrogen atoms for every palladium atom. For an example of reversible hydrogen storage alloys, see, R.L. Cohen a J.H. Wernick, "Hydrogen Storage Materials: Properties and Possibilities", Science, December 4, 1981, Vol. 214, NO. 4525, pg. 1081, which reported on the ability of alloys such as $LaNi_5$ to absorb hydrogen in the gas phase.

This characteristic of reversible hydrogen storage for $LaNi_5$-type alloys was reported as also being applicable in an electrochemical environment by Bronoel et al, "A New Hydrogen Storage Electrode", International Journal of Hydrogen Energy, Vol. 1, pp. 251-254, 1976. A metal or metal alloy suitable as a hydrogen storage material may be cathodically biased relative to a suitable counter electrode and charged with hydrogen by the reduction of a proton from solution. Other metal alloy systems that have been studied include TiMn-based, FeTi-based and Mg-based alloys. Although some of these crystalline materials store appreciable quantities of hydrogen, these same crystalline materials are susceptible to phase separation, hydrogen embrittlement and surface oxidation when subjected to repeated charge/discharge cycles for hydrogen storage. Phase separation occurs in crystalline alloys that are subjected to hydrogen cycling, wherein the alloy components separate and migrate throughout the alloy. In $LaNi_5$-type alloys, La migrates to the surface of the alloy, where it may rapidly become oxidized.

This problem was recently addressed in Japanese Publication 58, 163, 157 entitled "Metal Oxide-hydrogen battery". This publication describes a hydrogen storage battery having an improved $LaNi_5$ anode that is less susceptible to oxidation. This improvement comes from the use of a porous nickel layer disposed around the $LaNi_5$ anode to reduce oxidation.

Hydrogen embrittlement occurs in crystalline alloys as hydrogen is absorbed and desorbed. Hydrogen storage proceeds from the surface of the alloy to its interior, with hydrogen atoms breaking into the interstitial site of metal matrix atoms and then expanding the lattice. As a result internal stresses may produce flaws and cracks, seriously weakening and embrittling the metal or metal alloy. Surface oxidation may occur if the hydrogen storage material is exposed to oxidative conditions in the presence of an oxidant such as $CO_2$, $H_2O$, KOH, air, oxygen or an oxidizing acidic environment. Surface oxidation interferes with the penetration of hydrogen, reducing the amount of hydrogen absorbed and the rate of absorption. Additionally, these crystalline materials generally cannot withstand the corrosive environments that may exist when the materials are utilized in an electrochemical reaction. An analysis of the Ti-Mn alloy system, and it attendant drawbacks, is provided in Yayama, et al., "Electrochemical Hydrogen-Storage in Ti-Mn Alloy Electrodes", Japanese Journal of Applied Physics, Vol. 22, No. 10, pp. 621-623, October, 1983.

Recently, amorphous metal alloy materials have been reported as having the ability to store hydrogen reversibly. Amorphous metal alloy materials have become of interest due to their unique combinations of mechanical, chemical and electrical properties. Amorphous metal materials have compositionally variable properties including high

hardness and strength, flexibility, soft magnetic and ferroelectric properties, very high resistance to corrosion and wear, unusual alloy compositions, and high resistance to radiation damage. The unique combinations of properties possessed by amorphous metal alloy materials may be attributed to the disordered atomic structure of amorphous materials that insures that the material is chemically homogeneous and free from the extended defects that are known to limit the performance of crystalline materials.

A general discussion of hydrogen absorption by amorphous, or glassy, metal alloys was provided by G.G. Libowitz a A.J. Maeland, "Interactions of Hydrogen with Metallic Glass Alloys", Journal of the Less-Common Metals, 101, pp. 131-143, 1984.

Schroeder and Koster studied hydrogen embrittlement in Fe-Ni-B, Pd-Zr and Ni-Zr amorphous alloys ribbons, "Hydrogen Embrittlement of Metallic Glasses", Journal of Non-Crystalline Solids, 56, pp 213-218, 1983 whereas Fe-Ni-B alloys exhibited low hydrogen absorption and severe embrittlement, Pd-Zr and Ni-Z alloys could absorb up to one atom of hydrogen per metal atom and still retained some ductility.

Amorphous metal alloy systems of TiCu and ZrCu were investigated and contrasted with the absorption properties of the corresponding crystalline intermetallic compounds by Maeland, et al., "Hydrides of Metallic Glass Alloys," Journal of the Less-Common Metals, 74, pp. 279-285, 1980. Amorphous metal alloy compositions, under similar conditions of temperature and pressure were capable of absorbing larger amounts of hydrogen than their crystalline counterparts. Maeland, et al. restricted their studies to the gaseous absorption of hydrogen in a hydrogen atmosphere. The amorphous compositions are not expected to suffer from phase separation or to become embrittled, due to their unique

structure. However, these materials may not show substantial resistance to surface passivation by oxidation or to corrosion. Maeland, et al., by excluding oxygen in their system, and by working in a gaseous environment, have avoided addressing the effects of oxidation and harsh environments on the hydrogen storage amorphous metal alloys that were investigated.

A patent publication in the United Kingdom, GB 2 119 561 A to Energy Conversion Devices, Inc. describes a battery utilizing a hydrogen rechargeable anode that is an amorphous metal material. This publication examined Ti-Ni and Mg-Ni compositions as hydrogen storage anodes.

The work recited herein above is an indication of the interest that lies in the field of energy storage through the use of reversible hydrogen storage materials. However, the ability to store hydrogen is not alone sufficient to yield a useful material having widespread applications. The stability of such a material is also of paramount importance. Resistance to corrosion and oxidation must exist for continuous full-cycling of these materials. It is noted that the hydrogen batteries described in Japanese Publication 58,163,157 and U.K. Publication GB 2,119,561 A are never fully discharged during cycling, the fully discharged materials being sensitive to oxidation, and so, failure.

Copending and commonly-assigned European application, (Attorney's reference SS 4850) corresponding to USSN 717,430 describes energy storage devices utilizing amorphous metal alloy electrodes that can be charged to high energy densities and deeply discharged without suffering from corrosion or oxidation. These energy devices are taught only for use with alkaline electrolytes.

What is lacking in the field of reversible hydrogen storage for use as energy storage devices is an electrode that can reversibly store

hydrogen under acid conditions and undergo deep cyclic discharges without becoming unstable or adversely affected by corrosion or oxidation.

It is therefore one object of the present invention to provide an electrode capable of reversibly storing hydrogen under acid conditions.

It is another object of the present invention to provide an energy storage device utilizing a reversible hydrogen electrode that performs under acid conditions.

These and other objects of the present invention will become obvious to one skilled in the art from the following description of the invention and the appended claims.

## Summary of the Invention

The present invention is directed toward an electrode for reversibly storing hydrogen comprising an amorphous metal alloy of the formula:

$$A_aM_bM'_c$$

wherein A is at least one metal selected from the group consisting of Pd, Ag, Au, Cu, Hg and Pt;

M is at least one metal selected from the group consisting of Pb, Ru, Cr, Mo, Si, W, Ni, Al, Sn, Co, Fe, Zn, Cd, Ga and Mn; and

M' is at least one of the elements selected from the group consisting of Ca, Mg, Ti, Y, Zr, Hf, Nb, V, Ta and the rare earths; and

wherein a ranges from about 0.005 to about 0.80;

b ranges from zero to about 0.70; and

c ranges from about 0.08 to about 0.95.

The invention also relates to an energy storage device comprising a working electrode, a counter electrode electrically insulated from the working electrode, an acid electrolyte in contact with the working electrode and the counter electrode, and means for collecting electrical current therefrom; the working electrode comprising an amorphous metal alloy of the formula:

$$A_a M_b M'_c$$

wherein A is at least one metal selected from the group consisting of Pd, Ag, Au, Cu, Hg and Pt;

M is at least one metal selected from the group consisting of Pb, Ru, Cr, Mo, Si, W, Ni, Al, Sn, Co, Fe, Zn, Cd, Ga and Mn; and

M' is at least one of the elements selected from the group consisting of Ca, Mg, Ti, Y, Zr, Hf, Nb, V, Ta and the rare earths; and

wherein a ranges from about 0.005 to about 0.80;

b ranges from zero to about 0.70; and

c ranges from about 0.08 to about 0.95.

## Detailed Description of the Inventions

In accordance with the present invention there are provided novel electrodes that comprise an amorphous metal alloy of the formula:

$$A_a M_b M'_c$$

wherein A is at least one metal selected from the group consisting of Pd, Ag, Au, Cu, Hg and Pt;

M is at least one metal selected from the group consisting of Pb, Ru, Cr, Mo, Si, W, Ni, Al, Sn, Co, Fe, Zn, Cd, Ga and Mn; and

M' is at least one of the elements selected from the group consisting of Ca, Mg, Ti, Y, Zr, Hf, Nb, V, Ta and the rare earths; and

wherein a ranges from about 0.005 to about 0.80;

b ranges from zero to about 0.70; and

c ranges from about 0.08 to about 0.95.

Similar compositions are more fully described in copending European application, (Attorney's reference SS 4852) corresponding to USSN 717,429, entitled "Amorphous Metal Alloy Compositions for Reversible Hydrogen Storage," which application is incorporated herein by reference. Preferably A is Pd, Ag or Cu; M is at least one element selected from the group consisting of Mn, Fe, Ru, Pb, Cr, Mo and W; and M' is Ti, Mg, Ta or a combination thereof. If these compositions are used in strong acid environments that utilize a strongly oxidizing acid, then it is preferred that M include at least one of the elements Ru, Pb, Cr, W and Mo.

The compositions described herein are substantially amorphous metal alloys. The term "substantially" as used herein in reference to the amorphous metal alloys indicates that the metal alloys are at least fifty percent amorphous, as indicated by X-ray diffraction analysis. Preferably, the metal alloy is at least eighty percent amorphous, and most preferably about one hundred percent amorphous, as indicated by X-ray diffraction analysis. The use of the phrase "amorphous metal alloy" herein refers to amorphous metal-containing alloys that may also comprise non-metallic elements.

As taught herein, these compositions may readily be utilized as electrodes in acid storage devices. The electrode may comprise the amorphous metal alloy compositions discussed above separately or in

conjunction with a substrate. A ribbon of the amorphous metal alloy may provide a freestanding hydrogen storage electrode; packed powder of the compositions herein disclosed may provide a bulk hydrogen storage electrode; and these compositions deposited on substrates of any configuration may provide a possible hydrogen storge electrode of any desired shape.

The electrodes taught herein may also comprise structures as described in copending European application, (Attorney's reference SS 4851) corresponding to USSN 717,428, entitled "Improved Amorphous Metal Alloy Compositions for Reversible Hydrogen Storage". These improved compositions are characterized in that the compositions are graded, having a substantial concentration of the A component of the alloy on the active surface to enhance absorption and desorption of hydrogen, while the remaining components of the alloy, M and M', are disposed in the interior where they function as efficient bulk hydrogen storage materials.

The electrodes may also comprise at least two layers, the outer layer being an amorphous metal alloy as taught above having the formula $A_aM_bM'_c$, and the inner layer/layers comprising a known bulk hydrogen storage material which may be crystalline, amorphous or a combination thereof.

These electrodes can be prepared by any of the standard techniques for fabricating such materials. With respect to fabricating amorphous metal alloy electrodes, physical and chemical methods such as electron beam deposition, ion implantation, chemical reduction, thermal decomposition, ion cluster deposition, ion plating, liquid quenching, solid state diffusion, RF and DC sputtering may be utilized to form the compositions herein. One or more methods may be combined advantageously to produce the composite-structure electrodes taught herein. The A

component of the electrode may be concentrated on the surface of the electrode by first forming the electrode without the A component, then depositing the A component onto the surface of the formed electrode, and annealing the composition to form the desired amorphous metal alloy electrode. To insure the desired hydrogen storage properties of such amorphous metal alloy electrodes, it is intended that these electrodes be exposed to an environment wherein the temperature of the alloy does not reach or exceed its crystallization temperature.

The presence of other elements as impurities in the electrodes taught herein is not expected to seriously impair the ability of these electrodes to reversibly store hydrogen. Thus, trace impurities such as O, N, C, S, Se, Te, B, P, Ge, Sb, As and Ar are not expected to be seriously detrimental to the preparation and performance of these electrodes.

These electrodes are characterized by their use in acid environments wherein they exhibit high energy density, deep discharge ability and resistance to degradation as by oxidation. By "acid" environments is meant an environment wherein the pH is neutral or acid, that is, equal to or less than 7.

A feature of these electrodes that readily distinguishes them from other hydrogen storage electrodes is their ability to function in an acid environment. There are, at the present, relatively few energy storage systems that are based on an acid environment. Lead-acid batteries are representative of one such system. Acid energy storage devices are not numerous since most materials corrode in acidic environments. No known acid energy storage devices have been taught that utilize an amorphous metal alloy as the electrode. Generally, amorphous

metal alloys that are known to store hydrogen are not coupled with other necessary properties, such as corrosion resistance, to warrant their use in an acid environment. The electrodes described herein utilize amorphous materials that are stable in acid environments, resisting both corrosion and oxidation.

The electrodes taught herein also possess high energy density. By high energy density is meant an electrode's ability to store a relatively high amount of hydrogen per atom of alloy and also to efficiently store a relatively high amount of energy based on the alloy's weight and volume. Crystalline palladium, which is a known hydrogen storage material has an energy density on a charge-per-weight basis of about 139 mA-hr/gram and about 1668 mA-hr/$cm^3$ on a charge-per-volume basis. The electrodes described herein have measured energy densities of from about 56 mA-hr/gram to more than about 480 mA-hr/gram on a charge-per-weight basis and from about 517 mA-hr/$cm^3$ to more than about 4680 mA-hr/$cm^3$ on a charge-per-volume basis.

These same electrodes, having high energy densities, can also be fully discharged and recharged without significant degradation of the electrodes' capacity. By fully discharged is meant that the electrode can be discharged to the point where the cell voltage is essentially zero. This contrasts with other hydrogen electrode materials such as $LaNi_5$ and Ni-Ti, taught for use in alkaline environments, that cannot be fully discharged without some passivation of the hydrogen storage electrode. Repeated charge/discharge cycles further passivate electrode materials such as Ni-Ti until they are no longer capable of storing hydrogen.

This combination of high energy density coupled with deep discharge ability and resistance to corrosion and passivation in acid

environments makes these electrodes ideal candidates for use in energy storage devices.

Such an energy storage device may be an electrochemical device comprising a housing containing a working electrode as described hereinabove, a counter electrode electrically insulated from the working electrode and an acid electrolyte in contact with the working electrode and the counter electrode. This energy storage device may be electrochemically charged to store hydrogen in the working electrode and discharged to provide a source of electrons.

The electrolyte is preferably an aqueous acidic solution such as $H_2SO_4$, HCl, $HNO_3$, $H_3PO_4$, acetic acid and mixtures thereof. Upon charging, the working electrode reduces a proton from solution and stores the hydrogen atoms until a discharge of the energy storage device is initiated. Upon initiation, the stored hydrogen is released from the working electrode injecting a proton back into solution, providing a supply of electrons.

It is also within the purview of this invention to include a salt compound as the neutral or acid electrolyte or in addition to an acid electrolyte to improve the electrical conductivity of the electrolyte solution. Salts such as $Na_2SO_4$, and NaCl may comprise the electrolyte or may be added to an acid electrolyte, such as the addition of $Na_2SO_4$ to acetic acid.

The following examples demonstrate the electrodes and energy storage devices described in the present invention for storing hydrogen and which also possess other desirable properties such as resistance to surface passivation and corrosion. It is to be understood that these examples are utilized for illustrative purposes only, and are not intended, in any way, to be limitative of the present invention.

EXAMPLES

In the following examples, the electrodes to be tested were disposed in an electrolytic cell as the working electrode, opposite a counter electrode of Pb-oxide or graphite. The energy storage device utilized an electrolyte of $H_2SO_4$ or $H_3PO_4$.

Examples 1 is a control, utilizing a crystalline palladium electrode. Examples 2-10 incorporated substantially amorphous metal alloy hydrogen storage electrodes as taught herein.

The amorphous metal alloy electrodes in accordance with the present invention, were prepared via RF sputtering in argon gas. A two-inch research S-gun, manufactured by Sputtered Films, Inc. was employed. As is known, DC sputtering can also be employed and achieve similar results. For each of the examples, a titanium or tantalum substrate was positioned to receive the deposition of the sputtered amorphous alloy. The distance between the target and the substrate in each instance was approximately 10 centimeters. Each amorphous alloy composition sputtered onto the substrate had a thickness measured of from about 0.4 micron to about 1 micron. The composition of each alloy was verified by X-ray analysis and was also determined to be amorphous by X-ray analysis.

The hydrogen storage electrodes used had active surface areas of about 1.5 $cm^2$ each. The hydrogen storage electrode material and electrolyte for each example are listed below in Table 1. The hydrogen electrode was cyclically charged at about 1 mA until the cell voltage stabilized, and then fully discharged at about .1 mA. The capacity of the hydrogen electrode for each example was then calculated in terms of a hydrogen-to-metal ratio (H/M) and a charge density measured on both a charge-per-weight (mA-hr/gm) basis and a charge-per-volume (mA-hr/$cm^3$) basis. The results of these calculations are also shown in Table 1

below. Unless otherwise noted in Table 1, each composition was cycled at least 10 times before the calculations of the H/M ratio and charge density were made.

TABLE 1

HYDROGEN STORAGE ABILITY OF VARIOUS AMORPHOUS METAL ELECTRODES UNDER ACID CONDITIONS

| Example | Composition | Counter Electrode | Electrolyte | Hydrogen-to Metal Ratio (H/M) | Charge Density (mA-hr/gm) | (mA-hr/cm3) |
|---|---|---|---|---|---|---|
| 1 | crystalline Pd | graphite | 2N $H_2SO_4$ | 0.55 | 139 | 1668 |
| 2 | $Pd_{12}Mo_{30}Ti_{58}$ | graphite | 2N $H_2SO_4$ | 1.1 | 444(a) | 3064 |
| 3 | $Pd_{10}W_{30}Ti_{60}$ | graphite | 2N $H_2SO_4$ | 0.79 | 225 | 2160 |
| 4 | $Pd_{10}Fe_{20}Ti_{70}$ | graphite | 2N $H_3PO_4$ | 0.76 | 367 | 2165 |
| 5 | $Pd_2Ni_{18}Ti_{80}$ | graphite | 2N $H_3PO_4$ | 0.64 | 340 | 1836 |
| 6 | $Ag_{10}Si_{15}Ti_{75}$ | graphite | 2N $H_2SO_4$ | 0.36 | 190 | 912 |
| 7 | $Ag_{10}W_{20}Ti_{70}$ | graphite | 2N $H_2SO_4$ | 0.35 | 123 | 1000 |
| 8 | $Cu_{11}Mo_{14}Ti_{75}$ | graphite | 2N $H_2SO_4$ | 0.18 | 90 | 517 |
| 9 | $Pd_{70}Ti_{30}$ | Pb-oxide | 2N $H_2SO_4$ | 1.50 | 480 | 4680 |
| 10 | $Au_{60}Ta_{40}$ | Pb-oxide | 2N $H_2SO_4$ | 0.29 | 56 | 1000 |

a - after 200 cycles

The foregoing examples demonstrate the use of the inventive electrodes to reversibly store hydrogen. This ability is dramatically shown by contrasting Examples 1 and 2. In Example 1 a hydrogen storage electrode control material, crystalline palladium, was used in an electrolytic cell opposite a counter electrode of graphite and an electrolyte of 2N $H_2SO_4$. The efficiency of crystalline palladium was measured by a hydrogen-to-metal ratio of about 0.55 H/M and a charge density of about 139 mA-hr/gm, and the crystalline palladium was seen to exhibit some corrosion. In Example 2, the hydrogen storage electrode material was an amorphous composition of about $Pd_{12}Mo_{30}Ti_{58}$. The counter electrode utilized was graphite and the electrolyte was 2N $H_2SO_4$. The hydrogen storage electrode material did not show any corrosion throughout the about 200 cycles and demonstrated an efficiency measured by a hydrogen-to-metal ratio of about 1.1 H/M and a charge density of about 444 mA-hr/gm and 3064 mA-hr/$cm^3$, about three times greater charge density by weight than the crystalline palladium control material.

Although several amorphous metal alloy electrodes have been exemplified herein, it will readily be appreciated by those skilled in the art that other amorphous metal alloy electrodes falling within the scope of the compositions described herein as well-suited for reversibly storing hydrogen could be substituted therefore.

It is to be understood that the foregoing examples have been provided to enable those skilled in the art to have representative examples by which to evaluate the invention and that these examples should not be construed as any limitation on the scope of this invention. Inasmuch as the composition of the amorphous metal alloy electrodes employed in the present invention can be varied within the scope of the total specification disclosure, neither the particular A, M or M' components, nor the relative amounts of the components in the electrodes exemplified herein shall be construed as limitations of the invention.

Furthermore, while these electrodes were prepared by a sputtering technique which is a useful means for depositing the alloy onto a metal substrate such as titanium, it is to be understood that neither the process of sputtering nor the coating of substrates are to be construed as limitations of the present invention, in as much as hydrogen storage materials can be prepared and utilized by other processes and in other forms.

The reversible hydrogen storage ability of the amorphous metal alloy electrodes taught herein for use in acid environments provide heretofor unattainable hydrogen storage ability, corrosion resistance, resistance to oxidation, and stability, and so represent a substantial advancement to hydrogen storage and its ancillary technologies and applications.

Thus, it is believed that any of the variables disclosed herein can readily be determined and controlled without departing from the spirit of the invention herein disclosed and described. Moreover, the scope of the invention shall include all modifications and variations that fall within the scope of the attached claims.

CLAIMS:

1. An electrode for reversible hydrogen storage comprising an acid-resistant substantially amorphous metal alloy of the formula:

$$A_aM_bM'_c$$

wherein A is at least one metal selected from a group consisting of Pd, Ag, Au, Cu, Hg and Pt; M is at least one metal selected from the group consisting of Pb, Ru, Cr, Mo, Si, W, Ni, Al, Sn, Co, Fe, Zn, Cd, Ga and Mn; and M' is at least one metal selected from the group consisting of Ca, Mg, Ti, Y, Zr, Hf, Nb, V, Ta and the rare earth metals; and

wherein a ranges from about 0.005 to about 0.80; b ranges from zero to about 0.70; and c ranges from about 0.08 to about 0.95.

2. The electrode in accordance with Claim 1 wherein A is Pd, Ag, Cu or combinations thereof.

3. The electrode in accordance with Claim 1 wherein M includes at least one of Ru, Pb, Cr, W and Mo.

4. The electrode in accordance with Claim 1 wherein M' it Ti, Mg, Ta or a combination thereof.

5. The electrode in accordance with Claim 1 wherein said electrode comprises said amorphous metal alloy disposed on a substrate.

6. The electrode in accordance with Claim 1 wherein said electrode comprises a thin film of said substantially amorphous metal alloy.

7. The electrode in accordance with Claim 1 wherein said electrode comprises said substantially amorphous metal alloy disposed in powder form.

8. An energy storage device comprising a working electrode; a counter electrode electrically insulated from said working electrode, an acid electrolyte in contact with the working electrode and teh counter electrode, and means for collecting electrical current therefrom; the working electrode comprising a substantially amorphous metal alloy of the formula

$$A_aM_bM'_c$$

wherein A is at least one metal selected from a group consisting of Pd, Ag, Au, Cu, Hg and Pt;
M is at least one metal selected from the group consisting of Pb, Ru, Cr, Mo, Si, W, Ni, Al, Sn, Co, Fe, Zn, Cd, Ga and Mn; and
M' is at least one metal selected from the group consisting of Ca, Mg, Ti, Y, Zr, Hf, Nb, V, Ta and the rare earths; and

wherein a ranges from about 0.005 to about 0.50;
b ranges from zero to about 0.70; and
c ranges from about 0.08 to about 0.95.

9. The energy storage device in accordance with Claim 8 wherein said counter electrode is graphite.

10. The energy storage device in accordance with Claim 8 wherein said counter electrode is Pb-oxide.

11. The energy storage device in accordance with Claim 8 wherein said acid electrolyte is selected from the group consisting of $H_2SO_4$, HCl, $HNO_3$, $H_3PO_4$, acetic acid and mixtures thereof.

12. The energy storage device in accordance with Claim 8 wherein said working electrode is fully dicharged in operation.